# EUROPEAN PATENT SPECIFICATION

(11) **EP 4 175 603 B1**
(45) Date of publication and mention of the grant of the patent: **07.01.2026**
(21) Application number: 21837028.6
(22) Date of filing: 29.06.2021
(51) Int. Cl.: G01N 21/84

(54) **ASSEMBLY FOR USE IN MEDICAL DIAGNOSTIC DEVICE AND SYSTEM FOR ANALYSIS OF SAMPLES**
ANORDNUNG ZUR VERWENDUNG IN EINER MEDIZINISCHEN DIAGNOSEVORRICHTUNG UND SYSTEM ZUR ANALYSE VON PROBEN
ENSEMBLE DESTINÉ À ÊTRE UTILISÉ DANS UN DISPOSITIF DE DIAGNOSTIC MÉDICAL ET SYSTÈME D'ANALYSE D'ÉCHANTILLONS

(30) Priority: 06.07.2020 US 202063048398 P
(43) Date of publication of application: 10.05.2023
(73) Proprietor: Siemens Healthcare Diagnostics, Inc., Tarrytown, NY 10591 (US)
(72) Inventor: ARFAN, Mohammed, 560041 Bangalore (IN); BHATTACHARYA, Sudipa, 560067 Bangalore (IN)
(74) Representative: Schweitzer, Klaus
(86) International application number: PCT/US2021/039547
(87) International publication number: WO 2022/010693

(56) References cited:
- US-A- 5 289 065
- US-A1- 2004 095 615
- US-A1- 2007 039 101
- US-A1- 2009 155 921
- US-A1- 2009 155 921
- US-B2- 10 436 713
- US-B2- 8 223 021

## Description

This application claims benefit under 35 USC § 119(e) of US Provisional Application No. 63/048,398, filed July 6, 2020.

### FIELD OF TECHNOLOGY

The present disclosure relates to the field of medical diagnostic devices and systems for analysis of a sample and more particularly to the field of an assembly for use in medical diagnostic devices and systems for the analysis of the sample.

### BACKGROUND

Efficient and accurate diagnosis of diseases is the need of the hour. Medical diagnostic devices enable analysis of a given sample to identify a presence or absence of a disease in an individual. In order that the medical diagnostic devices function accurately, calibration of the medical devices is essential. Calibration confirms reliability of results obtained from the medical devices. Medical diagnostic devices, in particular, bioanalyzers, are mostly colorimetric and therefore color obtained from tests performed by the bioanalyzer is used for interpretation of results. In such medical diagnostic devices, placement of calibration units is critical as any spillage or splattering of the sample being tested can contaminate the medical device and hamper or impede the accuracy of the results. Additionally, the medical diagnostic devices may be bulky and may require an increased space for storage.

US 2009/0155921 A1 describes a portable device for accurately determining a test result from a test strip. A base of the device contains a mechanically-powered transport mechanism that is activated by the operator by inserting the cassette holder into the device as far as it will travel until stopped. The device is used by switching on the power and inserting a test cassette into a cassette holder and in turn inserting the cassette holder into a cutout of a front wall. The cassette holder is pushed into the device.

US 2004/0095615 A1 refers to a scanner which is capable of two-dimensional scanning operation for obtaining images of the biological samples deposited deep in deposition cells. A sample holder defining a plurality of cells is positioned on and supported by a sample tray. Each cell receives and retains a sample to be scanned by the scanner comprising a transverse transmission system for moving the sample tray. The system comprises a gear, which is rotatably mounted on a carrier and is engageable with the rack when the gear is rotated.

Therefore, there is a need for a medical diagnostic device in which the calibration unit can be positioned in a way that the calibration unit remains untouched, clean and undamaged. Additionally, there is also a need for having a medical diagnostic device with a smaller footprint.

### SUMMARY

An assembly for use in a medical diagnostic device for analysis of one or more samples is disclosed. In one aspect, the assembly includes at least one extendable sample tray, wherein the sample tray may be configured to hold the one or more samples. The assembly further includes at least one holding unit configured to hold a color checker card. The at least one holding unit may be coupled to the at least one extendable sample tray. In particular, the at least one sample tray and the at least one holding unit are arranged in a same plane such that when the at least one sample tray is extended, the at least one holding unit is brought in a field of view of the image capturing unit. The at least one holding unit is automatically rollable into a casing unit. The holding unit is engageable with a roller unit such that winding and unwinding of the holding unit is achieved.

In another aspect, a medical diagnostic device for analysis of one or more samples is disclosed. The medical diagnostic device includes an assembly for use in the medical diagnostic device, an image capturing unit configured to capture one or more images of the one or more samples, an illumination unit configured to illuminate the one or more samples, and an analyzer unit configured to analyze the one or more samples. The medical diagnostic device further includes a processing unit and a memory coupled to the processing unit. Additionally, the memory includes a module which may be configured to perform an extension of at least one extendable sample tray in the medical diagnostic device. Further, when the at least one extendable sample tray is extended, at least one holding unit is brought in a field of view of an image capturing unit.

In yet another aspect, a system for analysis of one or more samples is disclosed. The system includes one or more servers and a medical diagnostic device as claimed in claim 8. The medical diagnostic device may be communicatively coupled with the one or more servers. The one or more servers may include computer readable instructions which when executed by the one or more servers causes the one or more servers to perform an extension of at least one extendable sample tray in the medical diagnostic device such that wherein when the at least one extendable sample tray is extended, at least one holding unit is brought in a field of view of an image capturing unit in the medical diagnostic device.

In another aspect, a non-transitory computer-readable storage medium having machine readable instructions for performing an extension of at least one sample tray in a medical diagnostic device such that when the at least one sample tray is extended, at least one holding unit is brought in a field of view of an image capturing unit in the medical diagnostic device. The at least one holding unit is automatically rollable into a casing unit. The holding unit is engageable with a roller unit such that winding and unwinding of the holding unit is achieved.

This summary is provided to introduce a selection of concepts in a simplified form that are further described below in the following description. The present invention is defined by the appended independent claims. Specific embodiments are defined in the dependent claims.

### BRIEF DESCRIPTION OF THE DRAWINGS

The present invention is further described hereinafter with reference to illustrated embodiments shown in the accompanying drawings, in which:
Figure 1 illustrates block diagram of a client-server architecture which provides geometric modeling of components representing different parts of a real-world object, according to an embodiment,
Figure 2 illustrates a block diagram of a medical diagnostic device for analysis of one or more samples, according to an embodiment of the invention.
Figure 3 illustrates a block diagram of a medical diagnostic device for analysis of one or more samples, according to an embodiment of the invention.
[not claimed] Figure 4A illustrates a top view of an assembly for use in a medical diagnostic device for analysis of one or more samples, according to a first embodiment of the invention.
[not claimed] Figure 4B illustrates a side view of the assembly for use in a medical diagnostic device, according to the first embodiment of the invention.

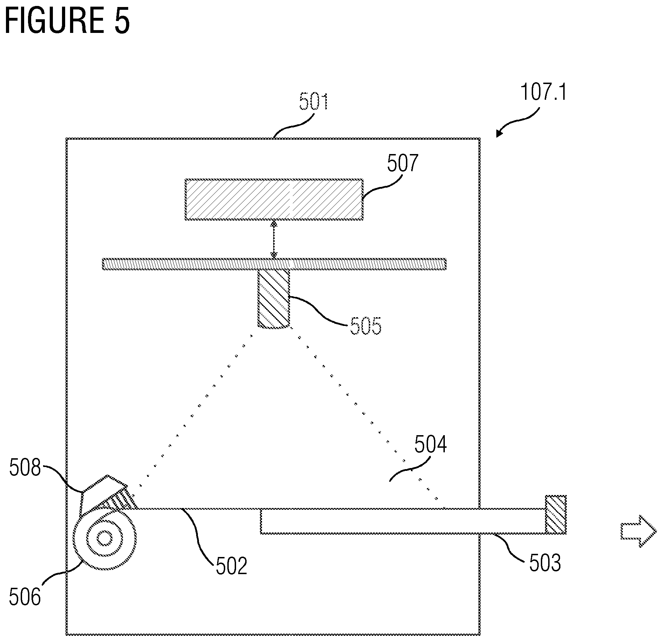

Figure 5 illustrates an assembly for use in a medical diagnostic device for analysis of one or more samples, according to a second embodiment of the invention.

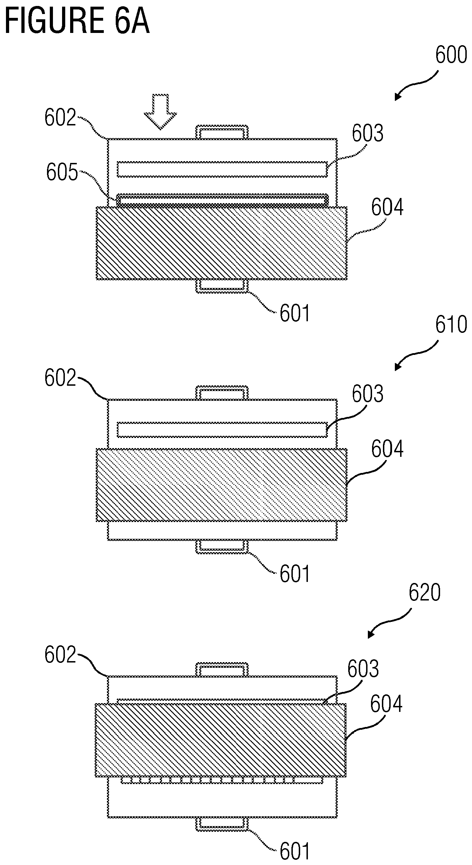

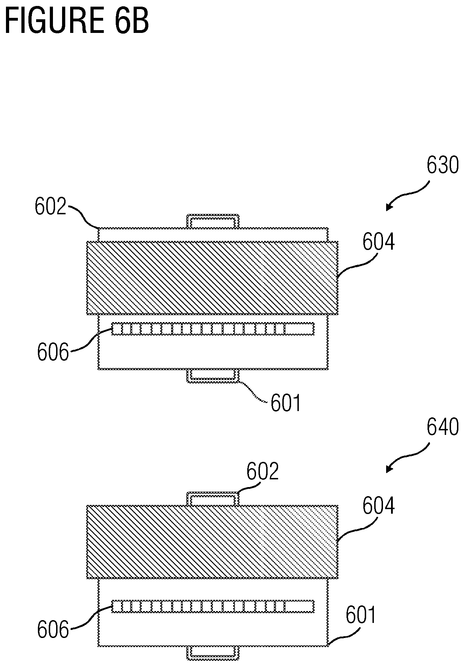

Figure 6A and 6B illustrate plurality of views of an assembly for use in the medical diagnostic device for analysis of one or more samples, according to a third embodiment of the invention.

### DETAILED DESCRIPTION

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details. In other instances, well known materials or methods have not been described in detail in order to avoid unnecessarily obscuring embodiments of the present disclosure. While the disclosure is susceptible to various modifications and alternative forms, specific embodiments thereof are shown by way of example in the drawings and will herein be described in detail. The scope of the invention is defined by the appended claims.

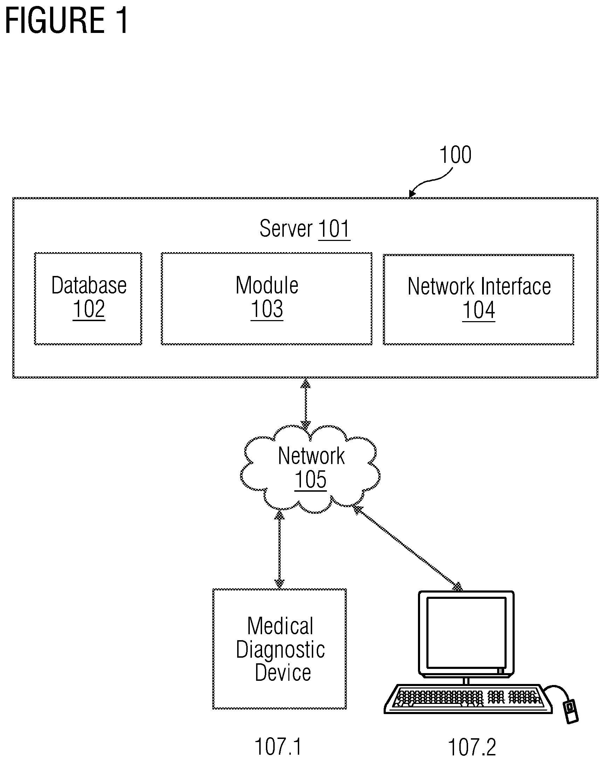

Figure 1 provides an illustration of a block diagram of a client-server architecture that is a geometric modelling of components representing different parts of real-world objects, according to an embodiment. The client-server architecture 100 includes a server 101 and a plurality of client devices 107.1-107.2. Each of the client devices 107.1-107.2 is connected to the server 101 via a network 106, for example, local area network (LAN), wide area network (WAN), WiFi, etc. In one embodiment, the server 101 is deployed in a cloud computing environment. As used herein, "cloud computing environment" refers to a processing environment comprising configurable computing physical and logical resources, for example, networks, servers, storage, applications, services, etc., and data distributed over the network 106, for example, the internet. The cloud computing environment provides on-demand network access to a shared pool of the configurable computing physical and logical resources. The server 101 may include a database 102 that comprises captured images of one or more samples. The server 101 may include a module 103 that may be configured to perform an extension of at least one sample tray in a medical diagnostic device. Additionally, the server 101 may include a network interface 104 for communicating with the client devices 107.1-107.2 via the network 105.

The client devices 107.1-107.2 include the medical diagnostic device 107.1 for analyzing one or more samples. The device 107.1 may be configured to analyze one or more samples and capture an image of the one or more samples. Such image may be sent to the server 101 via a network interface. The client devices 107.1-107.2 also include a user device 107.2, used by a user. In an embodiment, the user device 107.2 may be used by the user, to receive one or more information from the medical diagnostic device 107.1. The one or more information can be accessed by the user via a graphical user interface of an end user web application on the user device 107.2.

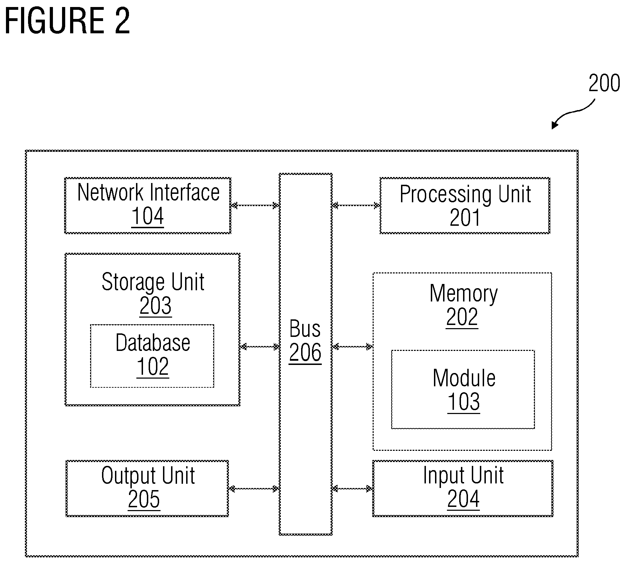

Figure 2 is a block diagram of a system 200 in which an embodiment can be implemented, for example, as a system for analysis of one or more samples, configured to perform the processes as described therein. It is appreciated that the server 101 is an exemplary implementation of the system in Figure 2. In Figure 2, the system 200 comprises a processing unit 201, a memory 202, a storage unit 203, an input unit 204, an output unit 205 a network interface 104, a standard interface or bus 206. As an alternative, the system 200 can be a real or a virtual group of computers (the technical term for a real group of computers is "cluster", the technical term for a virtual group of computers is "cloud").

The processing unit 201, as used herein, means any type of computational circuit, such as, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 201 may also include embedded controllers, such as generic or programmable logic devices or arrays, application specific integrated circuits, single-chip computers, and the like. In general, a processing unit 201 can comprise hardware elements and software elements. The processing unit 201 can be configured for multithreading, i.e. the processing unit 201 can host different calculation processes at the same time, executing the either in parallel or switching between active and passive calculation processes.

The memory 202 may be volatile memory and non-volatile memory. The memory 202 may be coupled for communication with the processing unit 201. The processing unit 201 may execute instructions and/or code stored in the memory 202. A variety of computer-readable storage media may be stored in and accessed from the memory 202. The memory 202 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 202 includes a module 103 stored in the form of machine-readable instructions on any of the above-mentioned storage media and may be in communication to and executed by processing unit 201. When executed by the processing unit 201, the module 103 causes the processing unit 201 to perform an extension of at least one sample tray in the medical diagnostic device 107.1.

The storage unit 203 may be a non-transitory storage medium which stores the database 102. The database 102 is a repository of images and other associated information associated with the one or more samples analyzed by the medical diagnostic device 107.1. The input unit 204 may include input means such as keypad, touch-sensitive display, camera, etc. capable of receiving input signal. The bus 206 acts as interconnect between the processing unit 201, the memory 202, the storage unit 203, the communication interface 107 the input unit 204 and the output unit 205.

Those of ordinary skilled in the art will appreciate that the hardware depicted in Figure 2 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation with respect to the present disclosure.

A system in accordance with an embodiment of the present disclosure includes an operating system employing a graphical user interface. The operating system permits multiple display windows to be presented in the graphical user interface simultaneously with each display window providing an interface to a different application or to a different instance of the same application. A cursor in the graphical user interface may be manipulated by a user through the pointing device. The position of the cursor may be changed and/or an event such as clicking a mouse button, generated to actuate a desired response.

One of various commercial operating systems, such as a version of Microsoft Windows^{™}, a product of Microsoft Corporation located in Redmond, Washington may be employed if suitably modified. The operating system is modified or created in accordance with the present disclosure as described.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of systems, and is not limited to any particular distributed architecture, network, or communication protocol.

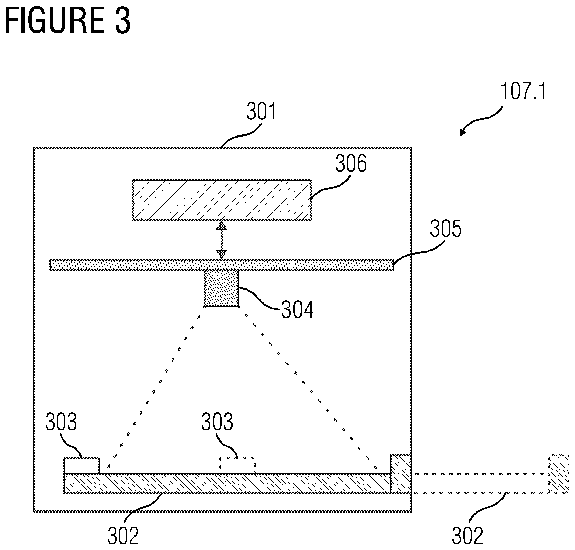

Figure 3 illustrates a block diagram of a medical diagnostic device 107.1 for analysis of the one or more samples, according to an embodiment. The device 107.1 may include an enclosure 301 to hold one or more components associated with the medical diagnostic device 107.1. The one or more components in the enclosure 301 may include an assembly of one or more components. The assembly includes at least one extendable sample tray 302 configured to hold one or more samples, at least one holding unit 303 configured to hold a calibration marker, an illumination unit 305, an image capturing unit 304 and an analyzer unit 306. The one or more samples may be, for example, urinalysis cassettes. The extendable sample tray 302 may protrude or extend out of the enclosure of the medical diagnostic device 107.1 on receiving a trigger. The trigger may be, for example, manual or a signal received from the processing unit associated with the medical diagnostic device 107.1. The manual trigger may be provided, for example, by pushing one or more buttons on the medical diagnostic device 107.1 configured to trigger the extension of the extendable sample tray 302. In an embodiment, such extension or protrusion of the extendable sample tray 302 may occur in a plane parallel to a plane of a surface on which the medical diagnostic device 107.1 is placed. The at least one holding unit 303 may be coupled to the extendable sample tray 302 such that the extension of the extendable sample tray 302 causes the at least one holding unit 303 to be brought in a field of view of the image capturing unit 304. In an embodiment, the extendable sample tray 302 may have a width proportional to an average width of the one or more samples. The length of the extendable sample tray 302 may be, for example, in the range of 15 - 20 cm.

One or more markings may be present on a surface of the extendable sample tray 302 configured to receive the one or more samples for further analysis. The one or more markings may be an indication of a location on the extendable sample tray 302 where the one or more samples are to be placed for further analysis. Therefore, when the one or more samples are placed on the one or more markings, closing of the extendable sample tray 302 causes the one or more samples to appear in the field of view of the image capturing unit 304. In a further embodiment, the extendable sample tray 302 may have one or more arrangements for securing the one or more samples to a surface of the extendable sample tray 302. Securing the one or more samples to the surface of the extendable sample tray 302 may prevent the one or more samples from moving away from a designated area or spilling on to the assembly. When brought in the field of view of the image capturing unit 304, the one or more samples may be illuminated using the illumination unit 305 in the medical diagnostic device 107.1. The illumination unit 305 may uniformly illuminate the one or more samples for effective analysis of the one or more samples. The illumination unit 305 may include, for example, one or more LED bulbs capable of generating light of a pre-defined intensity and wavelength.

In an embodiment, the at least one holding unit 303 may include a receptacle for holding the calibration marker. The calibration marker may include, for example, a color checker card. The color checker card may be used for performing a calibration of the medical diagnostic device 107.1. The at least one holding unit 303 may be positioned in a same plane as that of the extendable sample tray 302. The receptacle in the at least one holding unit 303 may be an indentation in which the calibration marker can be placed. The size of the receptacle may be proportional to that of the calibration marker. In an alternative embodiment, the receptacle may be capable of holding multiple calibration markers. In another embodiment, the holding unit 303 may be a part of the extendable sample tray 302. In a further embodiment, the at least one holding unit 303 may have an arrangement to avoid any portion of the one or more samples to come in contact with the calibration marker due to sample spillage. The arrangement may include a layering of a hydrophobic substance that may prevent the sample from coming in contact with the calibration marker. Alternatively, a bristled attachment may be positioned at the entrance of the holding unit which may prevent the contact of the one or more samples with the calibration marker.

The image capturing unit 304 may be positioned in a plane perpendicular to that of the at least one extendable sample tray 302 and the at least one holding unit 303. The image capturing unit 304 may be positioned such that the one or more samples on the extendable sample tray 302 or the calibration marker on the at least one holding unit 303 are completely within a field of view of the image capturing unit 304. The image capturing unit 304 may include imaging lenses and an imaging sensor, configured to capture an image of the one or more samples. The imaging sensor may be, for example, a charge-coupled device (CCD) or a complementary metal oxide semiconductor (CMOS). In a further embodiment, the image captured by the image capturing unit 304 may be analyzed by the analyzer unit 306. The analyzer unit 306 may be configured to analyze one or more color(s) associated with the one or more samples.

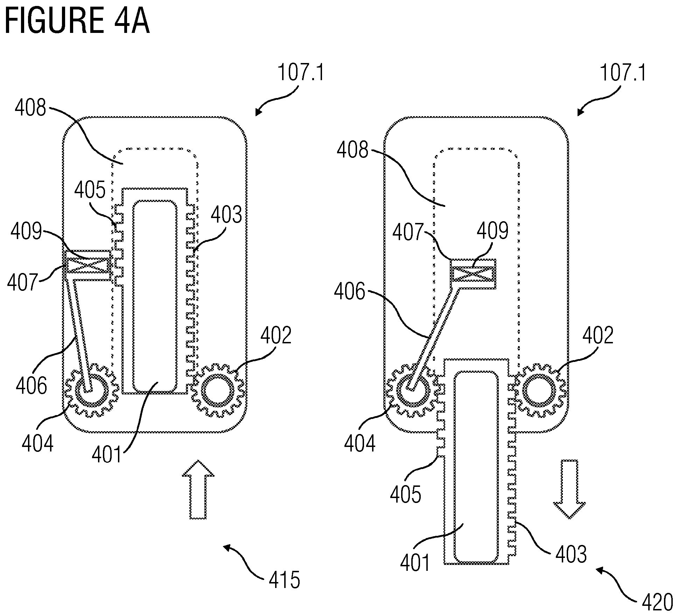

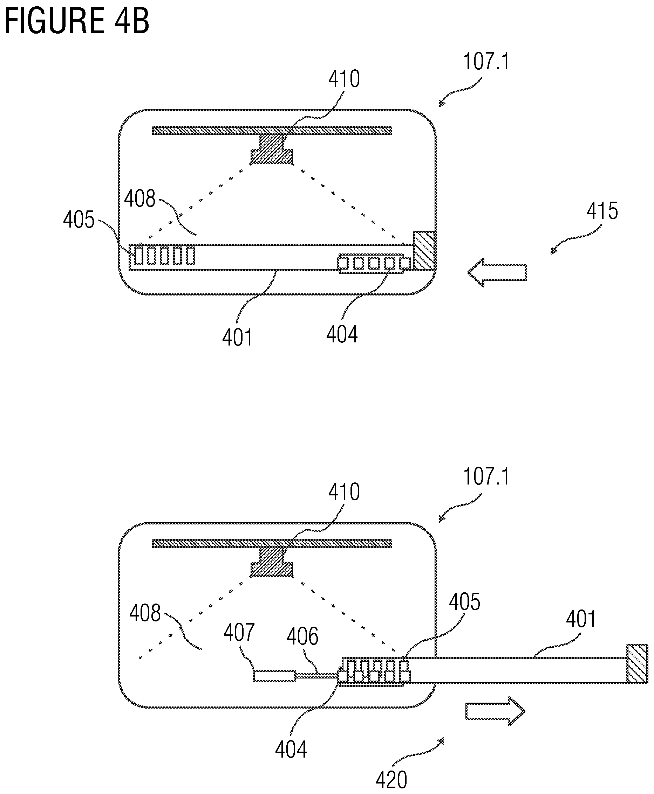

[not claimed] Figures 4A and 4B illustrate a top view and a side view respectively of an assembly 415, 420 for use in a medical diagnostic device 107.1 for analysis of one or more samples, according to a first embodiment. In the embodiment, the extendable sample tray 401 is coupled to a motorized gear 402 on one side. The motorized gear 402 may be, for example, a spur gear. A rack gear 403, 405 may be attached to the extendable sample tray 401 on both sides, i.e. along the height of the extendable sample tray 401. The motorized spur gear 402 may be coupled to the extendable sample tray 401 such that teeth of the motorized spur gear fit 402 into at least one slot of the rack gear 403 attached to the extendable sample tray 401. Therefore, a rack and pinion gear set-up is achieved. The extendable sample tray 401 may be coupled to a non-motorized gear 404 on the opposite side of the motorized spur gear 402. The non-motorized gear 404 may have a similar arrangement with a rack gear 405 attached to the extendable sample tray 401 such that teeth of the non-motorized gear 404 fits into a slot of the rack gear 405. The non-motorized gear 404 may further be coupled to an extended arm 406. The extended arm 406 is connected to the at least one holding unit 407, holding a calibration marker 409. In an embodiment, when the motorized spur gear 402 spins clockwise, the non-motorized gear 404 spins anticlockwise, and vice versa. Therefore, for example, as depicted in assembly 420, when the motorized spur gear 402 rotates anticlockwise, the extendable sample tray 401 extends out of the medical diagnostic device 107.1. Additionally, extension of the extendable sample tray 401 causes the non-motorized gear 404 to rotate clockwise. Thus, the extended arm 406 attached to the non-motorized gear 404 moves clockwise, thereby causing the at least one holding unit 407 to come into a field of view 408 of an image capturing unit 410 which may be located in a plane perpendicular to the extendable sample tray 401. A clockwise rotation of the motorized spur gear 402 would cause the extendable sample tray 401 to retract in the medical diagnostic device 107.1. Additionally, the non-motorized gear 404 rotates anticlockwise thereby causing the extended arm 406 connected to the at least one holding unit 407 to move away from the field of view of the image capturing unit 410.

Figure 5 illustrates yet another embodiment of an assembly for use as a medical diagnostic device 107.1 for analysis of one or more samples. In the embodiment, in an enclosure 501 of the device 107.1, the at least one holding unit 502 is connected with the extendable sample tray 503. Therefore, the at least one holding unit 502 is in a same plane as that of the extendable sample tray 503. The at least one holding unit 502 is attached to one end of the extendable sample tray 503 such that when the extendable sample tray 503 is extended, the at least one holding unit 503 appears in the field of view 504 of the image capturing unit 505 of the medical diagnostic device 107.1. The image capturing unit 505 may be communicatively coupled to an analyzer unit 507. In a further embodiment, the at least one holding unit 502 is rollable into a coil. The holding unit 502 may be placed inside a casing unit 506 once rolled such that when the extendable sample tray 503 is extended, the holding unit 502 is rolled out of the casing unit 506. The holding unit 502 may be made of a malleable material such that the rolling of the holding unit 502 can be achieved. For example, the holding unit 502 may be made of a synthetic polymerized material which may be rollable but can maintain a firm shape when unwounded. For example, the holding unit 502 may be composed of silica fiber, polyethylene terephthalate (PET), polycarbonate (PC), etc. The calibration marker may be embedded or fixated on a surface of the holding unit 502 which may face the image capturing unit 505 when the holding unit 502 is in the field of view of the image capturing unit 505. Therefore, winding of the holding unit 502 may also cause winding of the calibration marker into the casing unit 506. In an embodiment, the casing unit 506 may have an opening through which the holding unit 502 enters and radially coils around a roller unit. The holding unit 502 may be engageable with the roller unit such that winding and unwinding of the holding unit 502 may be achieved. In an embodiment, the roller unit in the casing unit 506 may be controlled using a motor. The opening of the casing unit 506 may have a bristled attachment 508 which may enable wiping of the holding unit 502 before the holding unit 502 rolls into the casing unit 506. The bristled attachment 508 may also wipe the holding unit 502 when being unwound from the casing unit 506. Advantageously, any dust that may be present on the holding unit 502 is removed by the bristled attachment 508.

Figures 6A and 6B illustrate plurality of views of an assembly for use in a medical diagnostic device 107.1 for analysis of one or more samples, according to another embodiment. The medical diagnostic device 107.1 includes the extendable sample tray 601 and the at least one holding unit 602 in the same plane and in alignment with each other. The extendable sample tray 601 is coupled to the at least one holding unit 602 such that extension of the extendable sample tray 601 causes the at least one holding unit 602 to come in the field of view of the image capturing unit. An upper surface of the at least one holding unit 602 holds a calibration marker 603. Therefore, at a given point in time, either the extendable sample tray 601 or the at least one holding unit 602 is in the field of view of the image capturing unit. In the figure, the image capturing unit is present inside a housing 604 located above the extendable sample tray 601 and the coupled holding unit 602. In the embodiment, when triggered, the extendable sample tray 601 extends out of a slot in the medical diagnostic device 107.1, as depicted in assemblies 610, 620, 630, 640. On extension of the extendable sample tray 601, the at least one holding unit 602 is brought in the field of view of the image capturing unit. Retracting the extendable sample tray 601 into the medical diagnostic device 107.1 causes the extendable sample tray 601 to come in the field of view of the image capturing unit while moving the at least one holding unit 602 away from the field of view of the image capturing unit, as depicted in assembly 610. A slot 605 may separate the extendable sample tray 601 and the at least one holding unit 602. In a further embodiment, the extension and retraction of the extendable sample tray 601 and the at least one holding unit 602 from the field of view of the image capturing unit may be performed by a motor. Such motor may be coupled to the extendable sample tray 601 and/or the at least one holding unit 602.

The advantage of the invention is that the overall footprint of the medical diagnostic device 107.1 is reduced in a laboratory setup. Therefore, the medical diagnostic device 107.1 occupies less space. Additionally, the extendable sample tray and the holding unit may be arranged in a way that the holding unit may not block the field of view during image acquisition of the one or more samples placed on the extendable sample tray. Furthermore, as the movement of the extendable sample tray and the holding unit is automated, the need for manual handling and manual calibration of the device is eliminated. Therefore, accuracy of the results post analysis of the one or more samples is maintained. Additionally, the presence of the bristled attachment avoids contact of spilled samples with the calibration marker. Therefore, any contamination of the system is avoided.

The foregoing examples have been provided merely for the purpose of explanation. While the invention has been described with reference to various embodiments, it is understood that the words, which have been used herein, are words of description and illustration, rather than words of limitation. The scope of the invention is defined by the following claims.

## Claims

1. An assembly for use in a medical diagnostic device (107.1) configured for analysis of one or more samples, the assembly comprising:
at least one extendable sample tray (302, 503) configured to hold the one or more samples; and
at least one holding unit (303, 502) coupled to the at least one extendable sample tray (302, 503), wherein the at least one holding unit (303, 502) is configured to hold a calibration marker (409);
wherein the at least one extendable sample tray (302, 503) and the at least one holding unit (303, 502) are arranged in a same plane;
**characterized in that**
when the at least one extendable sample tray (302, 503) is extended,
the at least one holding unit (303, 502) is brought in a field of view of an image capturing unit (304, 505);
wherein the at least one holding unit (303, 502) is automatically rollable into a casing unit (506) and
the holding unit is engageable with a roller unit such that winding and unwinding of the holding unit (502) is achieved.

2. The assembly according to claims 1, wherein the extension of the at least one sample tray causes rolling out of the rollable at least one holding unit (303, 502) from the casing unit (506).

3. The assembly according to any of the aforementioned claims, further comprising a bristled attachment (508) placed at the opening of the casing unit (506), wherein the bristled attachment (508) enables wiping of the holding unit (502) before the holding unit (502) rolls into the casing unit (506).

4. The assembly according to claim 1, further comprising one or more motorized gears (402) coupled to the at least one extendable sample tray (302, 503) and the at least one holding unit (303, 502) for performing extension of the at least one sample tray and movement of the at least one holding unit (303, 502).

5. The assembly according to any of the aforementioned claims, wherein the image capturing unit is positioned in a plane perpendicular to the plane of the at least one sample tray and the at least one holding unit.

6. The assembly unit according to any of the aforementioned claims, wherein when the at least one extendable sample tray (302, 503) is brought in the field of view of the image capturing unit, the one or more samples on the extendable sample tray (302, 503) are illuminated by a light source.

7. A medical diagnostic device (107.1) for analysis of one or more samples, the device comprising:
an assembly as claimed in claims 1 to 6;
an image capturing unit (304, 505) configured to capture one or more images of the one or more samples;
an illumination unit configured to illuminate the one or more samples;
an analyzer unit (306, 507) configured to analyze the one or more samples;
a processing unit (201); and
a memory (202) coupled to the processing unit, the memory comprising a module, wherein the module is configured to perform an extension of at least one extendable sample tray (302, 503) in the medical diagnostic device (107.1) such that wherein when the at least one extendable tray is extended, at least one holding unit (303, 502) is brought in a field of view of the image capturing unit (304, 505).

8. A system for analysis of one or more samples, the system comprising:
one or more servers; and
a medical diagnostic device (107.1) as claimed in claim 7, communicatively coupled to the one or more servers, wherein the one or more servers comprise computer readable instructions, which when executed by the one or more servers causes the one or more servers to perform an extension of at least one extendable sample tray (302, 503) in the medical diagnostic device (107.1) such that wherein when the at least one extendable sample tray (302, 503) is extended, at least one holding unit (303, 502) is brought in a field of view of an image capturing unit (304, 505) in the medical diagnostic device (107.1).

9. A non-transitory computer-readable storage medium having machine-readable instructions stored therein, that when executed by a server, cause the server to perform an extension of at least one sample tray in a medical diagnostic device (107.1) according to claim 7 that wherein when the at least one sample tray is extended, at least one holding unit (303, 502) is brought in a field of view of an image capturing unit (304, 505) in the medical diagnostic device (107.1), wherein the at least one holding unit (303, 502) is automatically rollable into a casing unit (506), and wherein the holding unit is engageable with a roller unit such that winding and unwinding of the holding unit (502) is achieved.

## Patentansprüche

1. Anordnung zur Verwendung in einer medizinischen Diagnosevorrichtung (107.1), die zur Analyse einer oder mehrerer Proben ausgelegt ist, wobei die Anordnung umfasst:
mindestens ein ausfahrbares Probenfach (302, 503), das dazu ausgelegt ist, die eine oder die mehreren Proben zu halten; und mindestens eine Halteeinheit (303, 502), die mit dem mindestens einen ausfahrbaren Probenfach (302, 503) gekoppelt ist, wobei die mindestens eine Halteeinheit (303, 502) dazu ausgelegt ist, einen Kalibrierungsmarker (409) zu halten;
wobei das mindestens eine ausfahrbare Probenfach (302, 503) und die mindestens eine Halteeinheit (303, 502) in der gleichen Ebene angeordnet sind;
**dadurch gekennzeichnet, dass**,
wenn das mindestens eine ausfahrbare Probenfach (302, 503) ausgefahren wird,
die mindestens eine Halteeinheit (303, 502) in ein Sichtfeld einer Bildaufnahmeeinheit (304, 505) gebracht wird;
wobei die mindestens eine Halteeinheit (303, 502) automatisch in eine Gehäuseeinheit (506) einrollbar ist und
die Halteeinheit mit einer Rolleneinheit derart in Eingriff bringbar, dass ein Auf- und Abwickeln der Halteeinheit (502) erreicht wird.

2. Anordnung nach Anspruch 1, wobei das Ausfahren des mindestens einen Probenfachs Herausrollen der mindestens einen rollbaren Halteeinheit (303, 502) aus der Gehäuseeinheit (506) bewirkt.

3. Anordnung nach einem der vorhergehenden Ansprüche, ferner umfassend eine mit Borsten versehene Befestigung (508), die an der Öffnung der Gehäuseeinheit (506) platziert ist, wobei die mit Borsten versehene Befestigung (508) Abwischen der Halteeinheit (502) ermöglicht, bevor die Halteeinheit (502) in die Gehäuseeinheit (506) rollt.

4. Anordnung nach Anspruch 1, ferner umfassend ein oder mehrere motorisierte Zahnräder (402), die mit dem mindestens einen ausfahrbaren Probenfach (302, 503) und der mindestens einen Halteeinheit (303, 502) gekoppelt sind, um Ausfahren des mindestens einen Probenfachs und Bewegung der mindestens einen Halteeinheit (303, 502) durchzuführen.

5. Anordnung nach einem der vorhergehenden Ansprüche, wobei die Bildaufnahmeeinheit in einer Ebene senkrecht zu der Ebene des mindestens einen Probenfachs und der mindestens einen Halteeinheit positioniert ist.

6. Anordnungseinheit nach einem der vorhergehenden Ansprüche, wobei, wenn das mindestens eine ausfahrbare Probenfach (302, 503) in das Sichtfeld der Bildaufnahmeeinheit gebracht wird, die eine oder die mehreren Proben auf dem ausfahrbaren Probenfach (302, 503) durch eine Lichtquelle beleuchtet werden.

7. Medizinische Diagnosevorrichtung (107.1) zur Analyse einer oder mehrerer Proben, wobei die Vorrichtung umfasst:
eine Anordnung nach den Ansprüchen 1 bis 6;
eine Bildaufnahmeeinheit (304, 505), die dazu ausgelegt ist, ein oder mehrere Bilder der einen oder mehreren Proben aufzunehmen; eine Beleuchtungseinheit, die dazu ausgelegt ist, die eine oder mehreren Proben zu beleuchten;
eine Analysatoreinheit (306, 507), die dazu ausgelegt ist, die eine oder mehreren Proben zu analysieren;
eine Verarbeitungseinheit (201); und
einen Speicher (202), der mit der Verarbeitungseinheit gekoppelt ist, wobei der Speicher ein Modul umfasst, wobei das Modul dazu ausgelegt ist, ein Ausfahren mindestens eines ausfahrbaren Probenfachs (302, 503) in der medizinischen Diagnosevorrichtung (107.1) durchzuführen, so dass beim Ausfahren des mindestens einen ausfahrbaren Fachs mindestens eine Halteeinheit (303, 502) in ein Sichtfeld der Bildaufnahmeeinheit (304, 505) gebracht wird.

8. System zum Analysieren von einer oder mehreren Proben, wobei das System umfasst:
einen oder mehrere Server; und
eine medizinische Diagnosevorrichtung (107.1) nach Anspruch 7, die kommunikativ mit dem einen oder den mehreren Servern gekoppelt ist, wobei der eine oder die mehreren Server computerlesbare Anweisungen umfasst/umfassen, die bei Ausführung durch den einen oder die mehreren Server bewirken, dass der eine oder die mehreren Server ein Ausfahren mindestens eines ausfahrbaren Probenfachs (302, 503) in der medizinischen Diagnosevorrichtung (107.1) durchführt/durchführen, so dass beim Ausfahren des mindestens einen ausfahrbaren Probenfachs (302, 503) mindestens eine Halteeinheit (303, 502) in ein Sichtfeld einer Bildaufnahmeeinheit (304, 505) in der medizinischen Diagnosevorrichtung (107.1) gebracht wird.

9. Nichtflüchtiges computerlesbares Speichermedium mit darin gespeicherten maschinenlesbaren Anweisungen, die bei Ausführung durch einen Server den Server veranlassen, Ausfahren mindestens eines Probenfachs in einer medizinischen Diagnosevorrichtung (107.1) nach Anspruch 7 durchzuführen, wobei beim Ausfahren des mindestens einen Probenfachs mindestens eine Halteeinheit (303, 502) in ein Sichtfeld einer Bildaufnahmeeinheit (304, 505) in der medizinischen Diagnosevorrichtung (107.1) gebracht wird, wobei die mindestens eine Halteeinheit (303, 502) automatisch in eine Gehäuseeinheit (506) einrollbar ist, und wobei die Halteeinheit mit einer Rolleneinheit derart in Eingriff bringbar ist, dass ein Auf- und Abwickeln der Halteeinheit (502) erreicht wird.

## Revendications

1. Ensemble destiné à être utilisé dans un dispositif de diagnostic médical (107.1) configuré pour l'analyse d'un ou plusieurs échantillons, l'ensemble comprenant :
au moins un plateau d'échantillons extensible (302, 503) configuré pour contenir le ou les échantillons ; et
au moins une unité de maintien (303, 502) couplée à l'au moins un plateau d'échantillons extensible (302, 503), l'au moins une unité de maintien (303, 502) étant configurée pour maintenir un marqueur d'étalonnage (409) ;
l'au moins un plateau d'échantillons extensible (302, 503) et l'au moins une unité de maintien (303, 502) étant agencés dans un même plan ;
**caractérisé en ce que**
lorsque l'au moins un plateau d'échantillons extensible (302, 503) est étendu,
l'au moins une unité de maintien (303, 502) est amenée dans un champ de vision d'une unité de capture d'images (304, 505) ;
l'au moins une unité de maintien (303, 502) étant automatiquement enroulable dans une unité de boîtier (506) et
l'unité de maintien étant susceptible d'être mise en prise avec une unité de rouleau de telle sorte que l'enroulement et le déroulement de l'unité de maintien (502) sont réalisés.

2. Ensemble selon la revendication 1, l'extension de l'au moins un plateau d'échantillons provoquant le déploiement de l'au moins une unité de maintien (303, 502) pouvant se dérouler à partir de l'unité de boîtier (506).

3. Ensemble selon l'une quelconque des revendications précédentes, comprenant en outre un élément brosse (508) placée à l'ouverture de l'unité de boîtier (506), l'élément brosse (508) permettant d'essuyer l'unité de maintien (502) avant que l'unité de maintien (502) s'enroule dans l'unité de boîtier (506).

4. Ensemble selon la revendication 1, comprenant en outre un ou plusieurs engrenages motorisés (402) couplés à l'au moins un plateau d'échantillons extensible (302, 503) et à l'au moins une unité de maintien (303, 502) pour effectuer l'extension de l'au moins un plateau d'échantillons et le déplacement de l'au moins une unité de maintien (303, 502).

5. Ensemble selon l'une quelconque des revendications précédentes, l'unité de capture d'images étant positionnée dans un plan perpendiculaire au plan de l'au moins un plateau d'échantillons et de l'au moins une unité de maintien.

6. Ensemble selon l'une quelconque des revendications précédentes, lorsque l'au moins un plateau d'échantillons extensible (302, 503) est amené dans le champ de vision de l'unité de capture d'images, le ou les échantillons sur le plateau d'échantillons extensible (302, 503) étant éclairés par une source de lumière.

7. Dispositif de diagnostic médical (107.1) pour analyse d'un ou plusieurs échantillons, le dispositif comprenant :
un ensemble selon les revendications 1 à 6 ;
une unité de capture d'images (304, 505) configurée pour capturer une ou plusieurs images du ou des échantillons ;
une unité d'éclairage configurée pour éclairer le ou les échantillons ;
une unité d'analyse (306, 507) configurée pour analyser le ou les échantillons ;
une unité de traitement (201) ; et
une mémoire (202) couplée à l'unité de traitement, la mémoire comprenant un module, le module étant configuré pour effectuer une extension d'au moins un plateau d'échantillons extensible (302, 503) dans le dispositif de diagnostic médical (107.1) de telle sorte que lorsque l'au moins un plateau extensible est étendu, au moins une unité de maintien (303, 502) est amenée dans un champ de vision de l'unité de capture d'images (304, 505).

8. Système d'analyse d'un ou plusieurs échantillons, le système comprenant :
un ou plusieurs serveurs ; et
un dispositif de diagnostic médical (107.1) selon la revendication 7, couplé de manière communicative aux un ou plusieurs serveurs, le ou les serveurs comprenant des instructions lisibles par ordinateur, qui, lorsqu'elles sont exécutées par le ou les serveurs, amènent le ou les serveurs à effectuer une extension d'au moins un plateau d'échantillons extensible (302, 503) dans le dispositif de diagnostic médical (107.1) de telle sorte que lorsque l'au moins un plateau d'échantillons extensible (302, 503) est étendu, au moins une unité de maintien (303, 502) est amenée dans un champ de vision d'une unité de capture d'images (304, 505) dans le dispositif de diagnostic médical (107.1).

9. Support de stockage non transitoire lisible par ordinateur dans lequel sont stockées des instructions lisibles par machine qui, lorsqu'elles sont exécutées par un serveur, amènent le serveur à effectuer une extension d'au moins un plateau d'échantillons dans un dispositif de diagnostic médical (107.1) selon la revendication 7 de sorte que lorsque l'au moins un plateau d'échantillons est étendu, au moins une unité de maintien (303, 502) est amenée dans un champ de vision d'une unité de capture d'images (304, 505) dans le dispositif de diagnostic médical (107.1), l'au moins une unité de maintien (303, 502) étant automatiquement enroulable dans une unité de boîtier (506), et l'unité de maintien étant susceptible de venir en prise avec une unité de rouleau de telle sorte que l'enroulement et le déroulement de l'unité de maintien (502) sont réalisés.
